Europäisches Patentamt

European Patent Office

Office européen des brevets

(11) Publication number: **0 324 977 B1**

# EUROPEAN PATENT SPECIFICATION

(45) Date of publication of patent specification: **24.06.92**    (51) Int. Cl.⁵: **A21D  6/00**

(21) Application number: **88121704.6**

(22) Date of filing: **27.12.88**

(54) **A method of making leavened frozen pastry articles.**

(30) Priority: **19.01.88 IT 1910888**

(43) Date of publication of application:
**26.07.89 Bulletin  89/30**

(45) Publication of the grant of the patent:
**24.06.92 Bulletin  92/26**

(84) Designated Contracting States:
**AT BE CH DE ES FR GB GR LI LU NL SE**

(56) References cited:
**WO-A-79/00195**
**DE-A- 2 246 214**
**FR-A- 2 481 072**

(73) Proprietor: **UNIONE LABORATORI S.R.L.**
**Via Bistolfi, 31**
**I-20100 Milano(IT)**

(72) Inventor: **Introini, Pierluigi**
**Via Giambellino, 131/2**
**I-20147 Milan(IT)**
Inventor: **Giorgetti, Antonio**
**Via Plinio, 20**
**I-20129 Milan(IT)**
Inventor: **Suardi, Mario**
**Via Marco Polo, 36/A**
**I-24047 Treviglio (Bergamo)(IT)**

(74) Representative: **Vannini, Torquato et al**
**JACOBACCI-CASETTA & PERANI S.p.A. 7 Via**
**Visconti di Modrone**
**I-20122 Milan(IT)**

## Description

This invention relates to a method of making leavened raw frozen pastry articles which can be preserved for a long time period in a freezer, whence they can be taken out and passed directly to the baking oven without requiring any preliminary swelling and/or additional rising step.

The method of this invention is of a type which comprises a rising step carried out on pastry articles formed from dough incorporating a leaven, and a quick-freezing step carried out on the leavened articles in their raw state.

The invention also relates to leavened frozen pastry articles as obtained by the above-mentioned method.

By the term "pastry articles", reference will be made throughout this specification and the appended claims to such articles as brioches, cookies, and the like, which are prepared from a ribbon of a dough incorporating leaven, to be obtained by conventional techniques, which ribbon is subsequently cut and molded according to desired patterns.

In order to make available, on short notice and at any sales outlets, widely varying quantities of pastry articles, so as to fill unforeseeable and changeable demands from the consumer public, it has long been known to apply the cold technique to the production of frozen or deep-frozen dough for pastry use.

A first procedure in the application of the aforesaid cold technique provides for the freezing or deep-freezing of unleavened or only part-leavened dough, preferably as previously formed into the desired patterns. Prior to baking, the dough or pattern articles require to be allowed to swell and rise, and these operations often bring time-consumption to an unacceptably high level.

A second procedure provides for the freezing or deep-freezing of thoroughly leavened dough, and it is with this procedure that this invention is concerned.

It is known in that method, e.g. from laid-open French Patents No.s 2,344,229 and 2,486,772, to subject leavened dough, and even raw leavened pastry articles, to quick-freezing down to a core temperature of -15°C to -20°C. Such deep-frozen products, to be preserved in enclosures at a temperature close to the deep-freezing temperature, can be passed to the baking oven directly from said enclosures.

The fast deep-freezing rate taught in order to avoid or at least mitigate killing the yeasts or appreciably degrading their activeness is achieved by taking the leavened product through and enclosure which is maintained at a temperature on the order of -80°C to -90°C (such as by using techniques based upon the utilization of cryogenic liquids).

However, in the sudden transition from a (rising) environment at 30°C to 35°C to a (deep-freezing) environment at -80°C to -90°C, a thin surface layer of the leavened product immediately solidifies into a crust, while the inner core of the product shrinks and loses the viscoelastic properties of the original dough, thus separating from the surface crust. This phenomenon results in the formation of major or minor inner voids which hinder proper baking of the product, possibly causing it to collapse.

This same adverse phenomenon is the more intense the less uniform is the alveolar structure of the leavened pastry article, and the uniformity of such is dependent on the degree of uniformity achieved in the distribution of moisture and leavens through the dough.

To obviate this shortcoming, techniques have been proposed and applied which, like in laid-open European Patent Application No. 145367, provide for slow, low-rate freezing of the leavened raw pastry articles. However, slow freezing results in a lowered production output, unless a freezing tunnel of great and uneconomical lenght is employed.

The problem that underlies this invention is to provide a method of making leavened raw frozen pastry articles which can overcome the cited drawback besetting the prior art.

This problem is solved according to the invention by a method characterized in that, prior to the rising step, the pastry articles are subjected to an RF treatment step, performed at frequencies within the range to about $10^4$ to $10^{10}$ Hz. More specifically for the purposes of this invention, radio waves in the $10^6$ to $10^8$ Hz frequency range have proved usable to advantage, and optimum results have been achieved by submitting the raw unleavened pastry articles to radio waves at frequencies in the $10^7$ to $10^8$ Hz range, for 1 to 3 minutes.

A first advantageous macroscopic outcome of the RF treatment is that, after rising, sectionized pastry articles have shown a regular, uniformly distributed alveolar structure throughout the section, which is a clear indication of uniform dough rising throughout the pastry article core. On subjecting to quick-freezing in an enviroment at temperatures in the -80°C to -90°C range and stabilizing inside cold storage rooms at -20°C, the raw leavened articles according to this invention have revealed no such drawback as the immediate formation of a surface crust and uneven shrinking of their core portions with consequent random separation thereof from the crust, but for a slight isotropic shrinkage accompanied by stiffening (crystallization) of the same regularly alveolar uniform structure yielded on completion of the rising step.

Another advantageous outcome of the RF treatment provided for unleavened raw pastry articles is represented by a slight increase in their volume in combination with a uniform heating from the starting temperature of 10° to 15°C to a temperature in the 25° to 30°C range, the term "uniform" referring herein to a form of heating which is applied simultaneously to the dough core throughout. This effect "prepares" the article for the successive rising step, thereby this is completed in a faster, easier, and more uniform way. Rising takes place, as is known, at temperatures on the order of 35° to 38°C and a relative humidity of about 80% to achieve a minimum increase of 120% in the volume of the particles in a time period of 50 to 60 minutes. The faster rate at which rising can be accomplished makes it possible to substantially and advantageously reduce the bulk size of the risers and to save on power consumption.

The features of the method according to the invention may be more clearly appreciated from the following description of an exemplary implementation thereof.

EXAMPLE

Preparation of leavened raw frozen brioches

A dough for making pastry articles commonly known as brioches was prepared in a conventional way using leavens and ingredient in amounts which are well known in the pastry art. On an optimum consistency being achieved, said dough, at a temperature in the 18°C to 21°C range, was at once subjected lamination and additivated with vegetable margarine to yield a dough ribbon consisting of plural layers of the starting dough and margarine. Following a conventional settling period, and further lamination to a predetermined thickness (of about 3-4 mm), triangular pieces where cut out and then rolled up on a machine into brioche blanks. The resulting (raw and unleavened) brioche blanks were treated for about 2 minutes with radio waves at a frequency in the 15 to 30 MHz range, and on completion of this treatment, the brioche blanks showed slightly increased volume and a uniform temperature increase to 28-30°C. Directly after the RF treatment, the brioche blanks were transferred to rising in an enclosure (riser) maintained at a temperature of 35°C and 80% relative humidity. The brioche blank residence time within the riser was 50 minutes, up to a minimum volume increase of 120% (specific volume, 2 ml/g).

Upon leaving the riser, the leavened raw brioche blanks were introduced at once into a freezing tunnel maintained at a temperature in the -80° to -90°C range (cryogenic tunnel), wherein they were quick-frozen for a residence time which showed to be 10 minutes.

Lastly, the leavened raw frozen (and optionally packaged) article was subjected to a temperature stabilization step within storage rooms at -20°C.

After a number of months, such articles were taken out of cold storage and directly to baking in an oven which had been pre-heated to 180°-200°C for 20 minutes, it showing a minimum volumetric growth of 70% (specific volume, 3.5 ml/g), as well as organoleptic and redolence properties quite comparable to those of similar articles as prepared by traditional confectionery methods.

**Claims**

1. A method of making leavened raw frozen pastry articles, for preservation in a freezer whence they can be taken out and passed directly to the baking oven without requiring any preliminary swelling and/or additional rising step, being of a type which comprises a rising step carried out on pastry articles formed from dough incorporating a leaven, and a quick-freezing step carried out on the leavened articles in the raw state thereof, characterized in that, prior to the rising step, the pastry articles are subjected to an RF (radio frequency) treatment step, performed at frequencies in the $10^4$ to $10^{10}$ Hz range so that, after rising, sectionized pastry articles have shown a regular, uniformly distributed alveolar structure.

2. A method according to Claim 1, characterized in that said treatment is performed at radio frequencies in the $10^6$ to $10^8$ Hz range.

3. A method according to Claim 1, characterized in that said treatment is performed at radio frequencies in the $10^7$ to $10^8$ Hz range.

4. A method according to Claim 3, characterized in that the duration of said treatment is for 1 to 3 minutes.

5. A method according to Claim 3, characterized in that
   - the rising step of the treated pastry articles is carried out in an enclosure maintained at a temperature of about 35°C to 38°C and about 80% relative humidity to achieve a minimum increase of 120% in the volume of said articles in a time period of 50 to 60 minutes
   - the quick freezing step of the leavened articles is carried out through a freezing tunnel maintained at a temperature of -80°C to -90°C and
   - the thus frozen articles are stabilized inside cold storage rooms at -20°C.

**6.** A leavened pastry article as frozen in the raw state to a core temperature of at least -10°C, having a uniformly distributed alveolar inner structure achieved by RF treating the article at an earlier stage than rising according to the method of the preceding claims.

**Revendications**

**1.** Procédé de fabrication d'articles de pâtisserie bruts levés surgelés, destinés à être conservés dans un congélateur d'où ils peuvent être repris et passés directement dans le four de cuisson sans nécessiter aucune étape préliminaire de gonflement et/ou de levée additionnelle, du type comportant une étape de levée effectuée sur des articles de pâtisserie constitués de pâte contenant un levain, et une étape de surgélation effectuée sur les articles levés à l'état brut, caractérisé en ce que, avant l'étape de levée, on soumet les articles de pâtisserie à une étape de traitement par ondes radio HF (haute fréquence) effectuée à des fréquences comprises dans la gamme de $10^4$ à $10^{10}$ HZ, de sorte qu'après avoir été levés, les articles de pâtisserie découpés présentent une structure alvéolaire régulière à répartion uniforme.

**2.** Procédé selon la revendication 1, caractérisé en ce qu'on effectue ledit traitement à des fréquences radio comprises dans la gamme de $10^6$ à $10^8$ HZ.

**3.** Procédé selon la revendication 1, caractérisé en ce qu'on effectue ledit traitement à des fréquences radio comprises dans la gamme de $10^7$ à $10^8$ HZ.

**4.** Procédé selon la revendication 3, caractérisé en ce que la durée dudit traitement est de 1 à 3 minutes.

**5.** Procédé selon la revendication 3, caractérisé en ce qu'on effectue l'étape de levée des articles de pâtisserie dans une enceinte maintenue à une température de 35°C à 38°C environ et à une humidité relative de 80% environ pour obtenir une augmentation minimale de 120% du volume desdits articles dans une période de temps de 50 à 60 minutes,
- on effectue l'étape de surgélation des articles levés dans un tunnel de congélation maintenu à une température de -80°C à -90°C et
- on stabilise les articles ainsi surgelés dans des salles de stockage à froid à -20°C.

**6.** Article de pâtisserie levé et surgelé à l'état brut à une température centrale d'au moins -10°C, présentant une structure interne alvéolaire à répartition uniforme obtenue en traitant l'article par ondes radio HF à un stade antérieur à la levée, suivant le procédé des revendications précédentes.

**Patentansprüche**

**1.** Verfahren zum Herstellen fermentierter, roh gefrorener Gebäckartikel zur Aufbewahrung in einem Gefrierschrank, aus dem die Artikel herausgenommen und direkt in einen Backofen überführt werden können, ohne daß ein vorheriges Blähen und/oder Auftreiben erforderlich ist, bei dem ein Auftreibschritt an den Gebäckartikeln, die aus Teig enthaltend ein Ferment (Hefe) geformt sind, sowie ein Schnell-Gefrierschritt an den fermentierten Gebäckartikeln in deren Rohzustand durchgeführt werden, dadurch **gekennzeichnet,** daß vor dem Auftreibschritt die Gebäckartikel einer HF-(Hochfrequenz-)Behandlung im Bereich von $10^4$ bis $10^{10}$ Hz unterzogen werden, so daß die abgeteilten Gebäckartikel nach dem Auftreibschritt eine regelmäßige, gleichmäßg verteilte Wabenstruktur aufweisen.

**2.** Verfahren nach Anspruch 1, dadurch **gekennzeichnet,** daß die Behandlung bei Hochfrequenzen im Bereich $10^6$ bis $10^8$ Hz durchgeführt wird.

**3.** Verfahren nach Anspruch 1, dadurch **gekennzeichnet,** daß die Behandlung bei Hochfrequenzen im Bereich von $10^7$ bis $10^8$ Hz durchgeführt wird.

**4.** Verfahren nach Anspruch 3, dadurch **gekennzeichnet,** daß die Behandlungsdauer bei 1 bis 3 Minuten liegt.

**5.** Verfahren nach Anspruch 3, dadurch **gekennzeichnet,** daß
- der Auftreibschritt der behandelten Gebäckartikel in einer Umgebung mit bei etwa 35°C bis 38°C gehaltener Temperatur und 80% relativer Feuchtigkeit durchgeführt wird, um einen minimalen Zuwachs von 120% des Volumens der Gegenstände während einer Zeitdauer von 50 bis 60 Minuten zu erzielen,
- der Schnellgefrierschritt der fermentierten Artikel in einem Gefriertunnel durchgeführt wird, der bei einer Temperatur von - 80°C bis - 90°C gehalten wird, und

- die so gefrorenen Artikel innerhalb kalter Speicherräume bei -20°C gehalten werden.

6. Fermentierter Gebäckartikel, der im Rohzustand auf eine Kerntemperatur von mindestens - 10°C gefroren ist und eine gleichförmig verteilte innere Wabenstruktur aufweist, die durch Hochfrequenz-Behandlung des Gegenstandes in einem Stadium vor dem Auftreiben gemäß einem Verfahren nach den vorangehenden Ansprüchen erhalten ist.